# EUROPEAN PATENT SPECIFICATION

(11) **EP 3 521 570 B1**
(45) Date of publication and mention of the grant of the patent: **24.11.2021**
(21) Application number: 18210580.9
(22) Date of filing: 05.12.2018
(51) Int. Cl.: F01D 11/00, F01D 11/24, F01D 11/08

(54) **COMPONENT AND CORRESPONDING GAS TURBINE ENGINE**
BAUTEIL UND ZUGEHÖRIGES GASTURBINENTRIEBWERK
COMPOSANT ET MOTEUR À TURBINE À GAZ ASSOCIÉ

(30) Priority: 05.02.2018 US 201815888237
(43) Date of publication of application: 07.08.2019
(73) Proprietor: Raytheon Technologies Corporation, Farmington, CT 06032 (US)
(72) Inventor: ANDERSON, Corey D., East Hartford, CT 06118 (US); SPANGLER, Brandon W., Vernon, CT 06066 (US)
(74) Representative: Dehns

(56) References cited:
- EP-A1- 1 094 200
- EP-A1- 1 319 804
- EP-A1- 2 093 381
- EP-A1- 2 211 024
- FR-A1- 3 001 492

## Description

### TECHNICAL FIELD

Illustrative embodiments pertain to the art of turbomachinery, and specifically to turbine rotor components. The present invention specifically relates to a component for a gas turbine engine and to a gas turbine engine.

### BACKGROUND ART

Gas turbine engines are rotary-type combustion turbine engines built around a power core made up of a compressor, combustor and turbine, arranged in flow series with an upstream inlet and downstream exhaust. The compressor compresses air from the inlet, which is mixed with fuel in the combustor and ignited to generate hot combustion gas. The turbine extracts energy from the expanding combustion gas, and drives the compressor via a common shaft. Energy is delivered in the form of rotational energy in the shaft, reactive thrust from the exhaust, or both.

The individual compressor and turbine sections in each spool are subdivided into a number of stages, which are formed of alternating rows of rotor blade and stator vane airfoils. The airfoils are shaped to turn, accelerate and compress the working fluid flow, or to generate lift for conversion to rotational energy in the turbine. Various cooling schemes are employed to ensure part life and durability. Improved cooling schemes may improve part life and provide other advantages.

EP 2093381 A1, FR 3001492 A1, EP 1319804 A1, EP 2211024 A1 and EP 1094200 A1 disclose components for gas turbine engines having various surface features.

In particular, EP 2093381 A1 discloses in its figure 1 a component for a gas turbine engine according to the preamble of claim 1.

### BRIEF DESCRIPTION

Viewed from one aspect the present invention provides a component for a gas turbine engine according to claim 1.

Advantageous aspects of the invention are defined in the dependent claims.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be illustrative and explanatory in nature and non-limiting.

### BRIEF DESCRIPTION OF THE DRAWINGS

The following descriptions should not be considered limiting in any way. With reference to the accompanying drawings, like elements are numbered alike: The subject matter is particularly pointed out and distinctly claimed at the conclusion of the specification. The foregoing and other features, and advantages of the present disclosure are apparent from the following detailed description taken in conjunction with the accompanying drawings in which like elements may be numbered alike and:
FIG. 1 is a schematic cross-sectional illustration of a gas turbine engine;
FIG. 2 is a schematic illustration of a portion of a turbine section of the gas turbine engine of FIG. 1;
FIG. 3A is a schematic illustration of a gas turbine engine part incorporate an embodiment of the present disclosure;
FIG. 3B is an enlarged and isolated illustration of a component of the gas turbine engine incorporating an embodiment of the present disclosure;
FIG. 4 is a schematic illustration of a component in accordance with an embodiment of the present disclosure;
FIG. 5 illustrates heat transfer augmentation feature formed as trip strips on the cold side of a component extension in accordance with an embodiment of the present disclosure;
FIG. 6 illustrates heat transfer augmentation feature formed as chevroned trip strips on the cold side of a component extension in accordance with an embodiment of the present disclosure;
FIG. 7 illustrates heat transfer augmentation feature formed as spherical bumps on the cold side of a component extension in accordance with an embodiment of the present disclosure;
FIG. 8 illustrates heat transfer augmentation feature formed as pedestals or a pedestal array on the cold side of a component extension in accordance with an embodiment of the present disclosure;
FIG. 9 is a schematic illustration of a component in accordance with an embodiment of the present disclosure as arranged relative to another part of a gas turbine engine; and
FIG. 10 is a schematic illustration of a component in accordance with an embodiment of the present disclosure as arranged relative to another part of a gas turbine engine.

### DETAILED DESCRIPTION

Detailed descriptions of one or more embodiments of the disclosed apparatus and/or methods are presented herein by way of exemplification and not limitation with reference to the Figures.

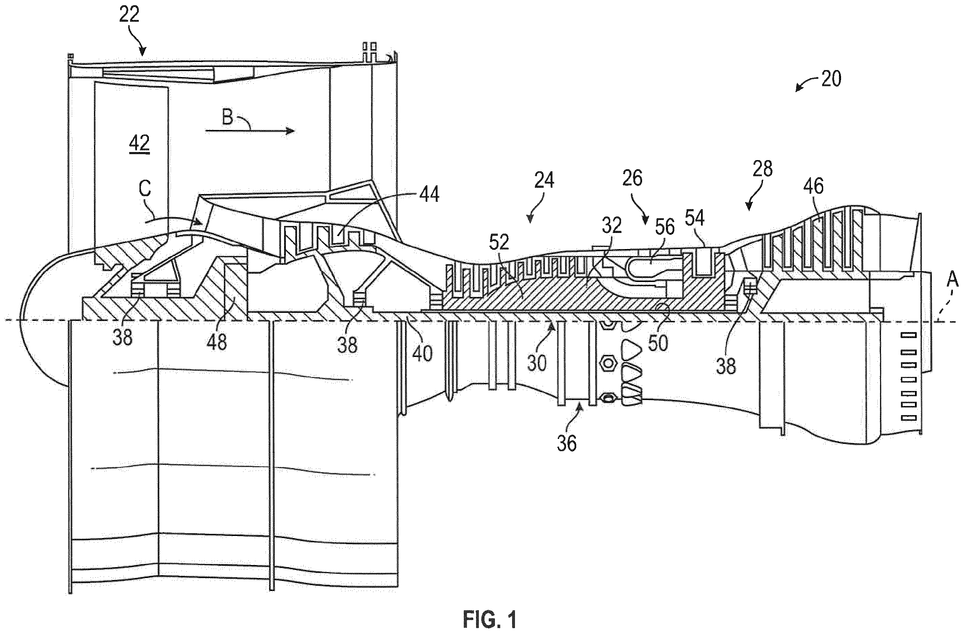

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one non-limiting example is a high-bypass geared aircraft engine. In a further non-limiting example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 35,000 feet (10,688 meters). The flight condition of 0.8 Mach and 35,000 ft (10,688 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(514.7 °R)]^{0.5}. The "Low corrected fan tip speed" as disclosed herein according to one non-limiting embodiment is less than about 1150 ft/second (350.5 m/sec).

Although the gas turbine engine 20 is depicted as a turbofan, it should be understood that the concepts described herein are not limited to use with the described configuration, as the teachings may be applied to other types of engines such as, but not limited to, turbojets, turboshafts, and three-spool (plus fan) turbofans wherein an intermediate spool includes an intermediate pressure compressor ("IPC") between a low pressure compressor ("LPC") and a high pressure compressor ("HPC"), and an intermediate pressure turbine ("IPT") between the high pressure turbine ("HPT") and the low pressure turbine ("LPT").

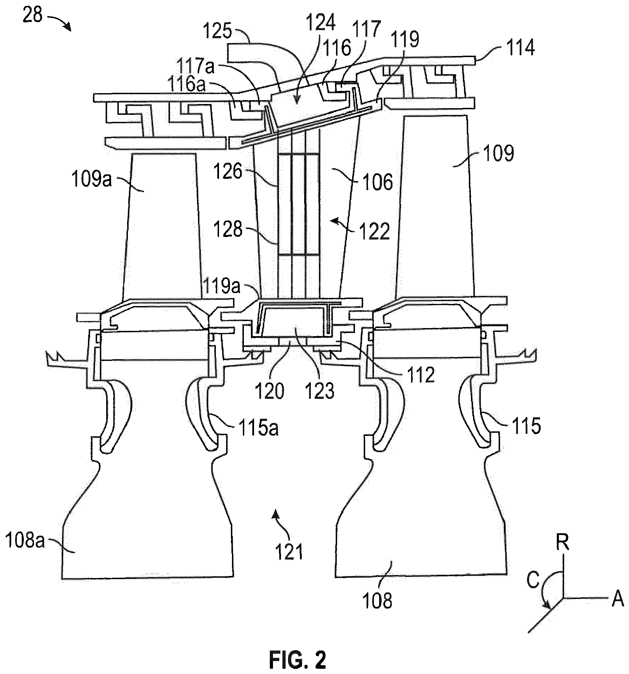

Referring now to FIG. 2, a cooling design in a turbine section 28 for a gas turbine engine 20 may utilize a vane 106 disposed between axially adjacent bladed full hoop disks 108, 108a having respective blades 109, 109a. As shown, vane 106 is disposed radially between an inner air seal 112 and a full hoop case 114 on an outer side. Inner air seal 112 may be a full hoop structure supported by opposing vanes, including a plurality of vanes 106 that are separated in a circumferential direction. Vane 106 is supported by the full hoop case 114 through segmented vane hooks 117, 117a. One or more full hoop cover plates 115, 115a may minimize leakage between the vane 106 and the blades 109, 109a. The vane 106 is radially supported by the full hoop case 114 with segmented case hooks 116, 116a in mechanical connection with the segmented vane hooks 117, 117a. The vane 106 may be circumferentially supported between circumferentially adjacent platforms 119, 119a which may include feather seals that can minimize leakage between the adjacent vanes 106 into the gas path.

A turbine cooling air (TCA) conduit 125 provides cooling air into an outer diameter vane cavity 124 defined in part by an outer platform 119 and the full hoop case 114. The vane 106 is hollow so that air can travel radially into and longitudinally downstream from the outer diameter vane cavity 124, through the vane 106 via one or more vane cavities 122, and into a vane inner diameter cavity 123. The vane inner diameter cavity 123 is defined, in part, by an inner platform 119a. Thereafter air may travel through an orifice 120 in the inner air seal 112 and into a rotor cavity 121. Accordingly, cooling air for at least portions of the vane 106 will flow from a platform region, into the vane, and then out of the vane and into another platform region and/or into a hot gaspath/main gaspath. In some arrangements, the platforms 119, 119a can include ejection holes to enable some or all of the air to be injected into the main gaspath.

It is to be appreciated that the longitudinal orientation of vane 106 is illustrated in a radial direction, but other orientations for vane 106 are within the scope of the disclosure. In such alternate vane orientations, fluid such as cooling air can flow into the vane cavity 122 through an upstream opening illustrated herein as outer diameter cavity 124 and out through a downstream opening in vane cavity 122 illustrated herein as inner diameter cavity 123. A longitudinal span of vane cavity 122 being between such openings.

The vane 106, as shown, includes one or more baffles 126 located within the vane 106. The baffles 126 are positioned within one or more respective baffle cavities 128. The baffle cavities 128 are sub-portions or sub-cavities of the vane cavity 122. In some embodiments, such as shown in FIG. 2, the baffle cavities 128 are internal cavities that are axially inward from the leading and trailing edges of the vane 106, although such arrangement is not to be limiting.

As shown and labeled in FIG. 2, a radial direction R is upward on the page (e.g., radial with respect to an engine axis) and an axial direction A is to the right on the page (e.g., along an engine axis). Thus, radial cooling flows will travel up or down on the page and axial flows will travel left-to-right (or vice versa). A circumferential direction C is a direction into and out of the page about the engine axis.

As illustratively shown in FIG. 2, and as will be appreciated by those of skill in the art, various gas turbine engine components (e.g., vane platforms, blade platforms, blade outer air seals ("BOAS")) have hot sides and cold sides. The hot side is a side of the component that is typically exposed to or faces a hot, main gaspath, and the cold side is the opposing side therefrom (e.g., facing away from the hot gaspath). In some arrangements, and as appreciated by those of skill in the art, a lip of such components (i.e., the edge of the platform, BOAS, etc.) even on the cold-side, may be exposed to hot gaspath air. As such, typically, cold or cooling air may be pushed along the cold-side edge to prevent hot gas from flowing toward or along the cold-side. Such cold or cooling air may be a leakage flow, as will be appreciated by those of skill in the art.

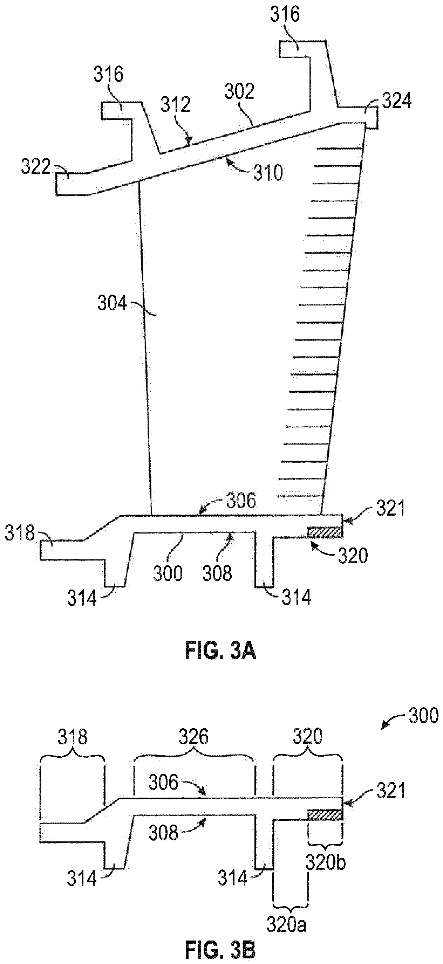

For example, turning to FIGS. 3A-3B, schematic illustrations of gas turbine engine components in accordance with an embodiment of the present disclosure are shown. As shown, the arrangement of FIG. 3A is first component 300, a second component 302, and a vane 304 extending therebetween. In this embodiment, the first and second components 300, 302 are platforms of the vane 304. FIG. 3B is an isolated illustration of the first component 300.

With reference to FIG. 3A, the first component 300 includes a hot side 306 and a cold side 308. Similarly, the second component 302 includes a hot side 310 and a cold side 312. The hot sides 306, 310 are exposed to hot gaspath air and the cold sides 308, 312 are on opposing sides of the respective components 300, 302. The first component 300 includes attachment elements 314 that are arranged to enable attachment of the first component 300 to another element of a gas turbine engine, as will be appreciated by those of skill in the art. Similarly, the second component 302 includes attachment elements 316 that are arranged to enable attachment of the second component 302 to another element of a gas turbine engine, as will be appreciated by those of skill in the art. In some configurations, the attachment elements 314, 316 may be rails or hooks to enable engagement or mounting of the respective components 300, 302.

Further, the first component 300 includes component extensions 318, 320 and the second component 302 includes component extensions 322, 324. The component extensions 318, 320, 322, 324 include what is typically called a "lip" located at an extreme end or edge of the component extension. The component extensions 318, 320, 322, 324 are arranged to have a cooling flow (e.g., leakage flow) on the cold side and are exposed to hot flow and/or the main gas path on the hot side. The leakage flow can prevent the hot gas from flowing into areas where it is not desirable to be present. In FIG. 3A, a first component extension 318 of the first component 300 is a forward extension and a second component extension 320 of the first component 300 is an aftward extension. In this arrangement, the forward extension 318 may extend forward and below a blade platform (e.g., as illustratively shown in FIG. 2) and the aftward extension 320 may extend aftward and above a blade platform (e.g., as illustratively shown in FIG. 2).

With reference to FIG. 3B, the first component 300 has a component body 326 from which the attachment elements 314 extend (on the cold side 308). The first component extension 318 extends forward from the component body 326 at the location of one of the attachment elements 314. In similar fashion, the second component extension 320 extends aftward from the component body 326 at the location of another of the attachment elements 314. As illustrated in FIG. 3B, the component extension 320 has two cold-side portions, a cold-side first portion 320a and a cold-side second portion 320b. The cold-side first portion 320a is a portion of the component extension 320 that is located between the cold-side second portion 320b and the attachment elements 314 of the component 300, defined on the cold side 308 of the component 300 and opposite the hot side 306. The cold-side second portion 320b extends outward from the cold-side first portion 320a and ends at an end surface 321 (e.g., the lip of the component extension), which is the extreme outer end or edge of the component extension 320. The cold-side second portion 320b is defined on the cold side 308 of the component 300 and opposite the hot side 306.

As noted, the cold side (308, 312) of the component extensions (318, 320, 322, 324) are cooled primarily by leakage flow. Depending on the conditions of this flow, the cooling effectiveness can be quite low, which in turn can cause the component extensions to be hot, particularly along the second portion 320b of the component extension 320. The increased heat at the component extensions can reduce the part life of the components.

Accordingly, embodiments provided herein are directed to improving the effectiveness of the leakage cooling by augmenting a convective heat transfer coefficient in a region near the extreme edge of the component extensions (i.e., along the second portion 320b and/or at the end surface 321 shown in FIG. 3B). Further, embodiments provided herein may enable increasing a wetted area for the leakage flow to promote better heat transfer. Moreover, embodiments provided herein can enable improved structural benefits through alteration of the component extension stiffness and load distribution.

According to the invention, one or more cold-side heat transfer augmentation feature are formed on the cold-side second portion and advantageously on the end surface of the component extension. The cold-side heat transfer augmentation feature are formed to provide additional wetted area and augment the heat transfer coefficient at or along the surface of the cold-side second portion and/or the end surface of the component extension, reducing metal temperature of the extreme edge of the component extension. The cold-side heat transfer augmentation feature can be a variety of shapes, geometries, or other structures that may range from simple to complex. The shapes can be raised out of the "nominal" surface of the component extension or may be recessed into the "nominal" surface of the component extension. In some embodiments, recessing the cold-side heat transfer augmentation feature can result in reduced part weight and can, in some instances, maintain a desired minimum gap size, thus keeping leakage flow constant.

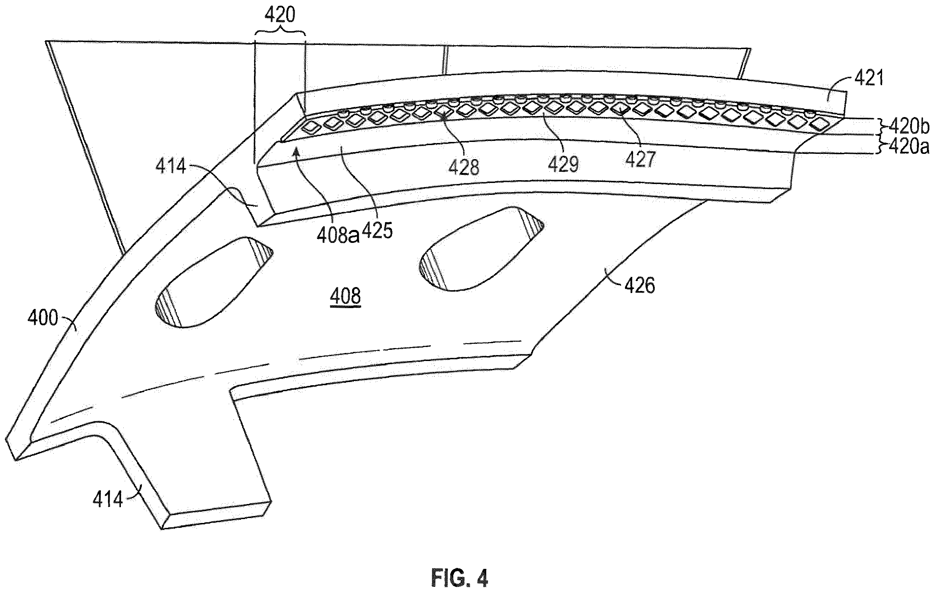

Turning now to FIG. 4, a schematic illustration of a component 400 in accordance with an embodiment of the present disclosure is shown. The view of FIG. 4 is a forward facing illustration looking at an aft-end of the component 400, as viewed looking at a cold side 408 of the component 400. Similar to the embodiment of FIGS. 3A-3B, the component 400 is a platform of a vane of a gas turbine engine. In this view, the component 400 has a component body 426 with attachment elements 414 extending therefrom. A component extension 420 is shown extending aftward from the component body 426 at the location where one of the attachment elements 414 extends from the component body 426.

As shown, the cold side 408a of the component extension 420 is defined by two regions or portions, having a cold-side first portion 420a and a cold-side second portion 420b, similar to that described above with respect to FIG. 3B. The cold-side first portion 420a of the component extension 420 is adjacent the attachment element 414 and is typically colder than the cold-side second portion 420b. In accordance with embodiments of the present disclosure, the cold-side first portion 420a, due to the thermal conditions thereof, does not contain any features as described herein. As such, the cold-side first portion 420a is designed such that heat pickup of a cooling flow flowing there along is minimized before such flow reaches the cold-side second portion 420b. In contrast, because the cold-side second portion 420b is adjacent to an end surface 421 of the component extension 420, a cold-side heat transfer augmentation feature 428 is provided thereon. In this embodiment, the cold-side heat transfer augmentation feature 428 is formed of a plurality of depressions formed in the material of the cold-side second portion 420b of the component extension 420. The cold-side heat transfer augmentation feature 428 may be machined, cast, additively manufactured, or otherwise formed in or on the component extension 420.

According to the invention, the cold-side heat transfer augmentation feature 428 includes a plurality of bases 427 and tips 429 that define the shape of the cold-side heat transfer augmentation feature 428 of the cold-side second portion 420b. The cold-side first portion 420a is a uniform or smooth surface 425 (i.e., lacking heat transfer augmentation features). In this embodiment, the tips 429 of the cold-side heat transfer augmentation feature 428 are flush or level with the surface 425 of the cold-side first portion 420a and the bases 427 of the cold-side heat transfer augmentation feature 428 are depressed from the level of the surface 425 of the cold-side first portion 420a. The cold-side heat transfer augmentation feature 428 extends along the cold-side second portion 420b from the cold-side first portion 420a to the end surface 421 of the component extension 420.

The cold-side heat transfer augmentation feature 428 of the present disclosure are a set of features on the non-gaspath side (i.e., cold side) of a component extension in a region near the extreme edge or lip (i.e., the end surface) of the component extension (e.g., an inner diameter platform aft-lip of a turbine vane). As noted, the cold-side heat transfer augmentation feature can provide a variety of benefits versus a traditional design which is typically a smooth surface. First, the cold-side heat transfer augmentation feature can be used to promote heat transfer by augmenting the convective heat transfer coefficient and increasing the surface area of the cold side of the component extension. This allows the metal temperatures along the cold-side second portion and/or end surface of the component extension to be decreased, improving part life. Secondly, protruding the cold-side heat transfer augmentation feature can be used to stiffen the structure of the component extension. A structurally stiffened component extension can change the structural characteristics of the region, and can be used to address structural concerns such as high cycle fatigue, low cycle fatigue, and yielding. Finally, selectively removing material to create the cold-side heat transfer augmentation feature can reduce part weight while maintaining cross-sectional areas in the gap between the component extension and another element/part/component of the gas turbine engine. Because leakages are increased with increasing gap size, the thickness of the component extension can be constrained. By incorporating the cold-side heat transfer augmentation feature of the present disclosure, the nominal gap can be maintained (and leakage flow unchanged), while part weight is reduced by the selective removal of material.

In accordance with various embodiments of the present disclosure, the area (or length) of the component extension that is defined as the cold-side second portion, and thus contains the cold-side heat transfer augmentation feature, may be based on a percentage of the total area or length of the component extension. For example, in some embodiments, the cold-side second portion, which includes the cold-side heat transfer augmentation feature, may encompass between 20% and 80% of the cold side of the component extension. As such, the cold-side first portion (i.e., the uniform surface portion) may comprise the remaining 80% to 20% of the cold side of the component extension, respectively.

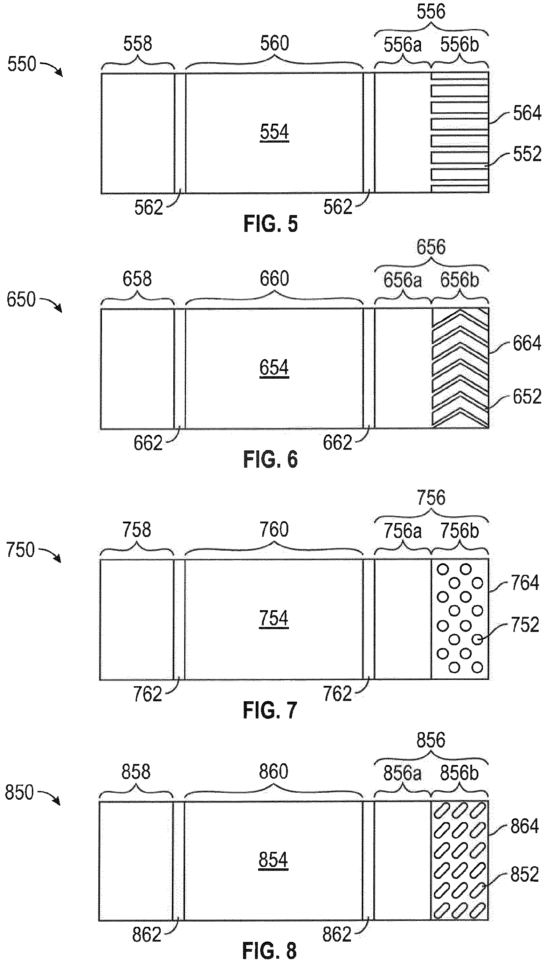

Turning now to FIGS. 5-8, schematic illustrations of different configurations of cold-side heat transfer augmentation feature in accordance with the present disclosure are shown. The components 550, 650, 750, 850 in the illustrations of FIGS. 5-8 are relatively simple illustrative drawings to illustrate an arrangement of various features of the present disclosure as located on or as part of a component of a gas turbine engine. The structure, shape, and orientation of the illustrations is not to be limiting, and the components 550, 650, 750, 850 may be representative of vane platforms, blade platforms, blade outer air seals, etc. Further, although shown with the cold-side heat transfer augmentation feature located to the "right" in the image, such orientation is not to be representative of forward or aft, but rather is provided for illustration purposes only. As such, the component extensions as described in FIGS. 5-8, and in any embodiment or variation thereon in the present disclosure, may be representative of forward or aft component extensions. Further, the location of the components within the gas turbine engine is not to be limiting, and the components can be inner diameter or outer diameter components.

FIG. 5 illustrates a cold-side heat transfer augmentation feature 552 formed as trip strips on a cold side 554 of a component extension 556. FIG. 5 is a plan view of a component 550 as viewing the cold side 554 thereof. As shown, the component 550 includes a first component extension 556 and a second component extension 558, each extending outward or away from a component body 560 at the location of an attachment element 562. The first component extension 556 is divided into a cold-side first portion 556a and a cold-side second portion 556b. The first component extension 556 extends from the attachment element 562 to an end surface 564, with the cold-side first portion 556a extending from the attachment element 562 and the cold-side second portion 556b extending from the cold-side first portion 556a to the end surface 564. The cold-side heat transfer augmentation feature 552 is formed on or in the cold-side second portion 556b in the shape of trip strips.

FIG. 6 illustrates a cold-side heat transfer augmentation feature 652 formed as chevroned trip strips on a cold side 654 of a component extension 656. FIG. 6 is a plan view of a component 650 as viewing the cold side 654 thereof. As shown, the component 650 includes a first component extension 656 and a second component extension 658, each extending outward or away from a component body 660 at the location of an attachment element 662. The first component extension 656 is divided into a cold-side first portion 656a and a cold-side second portion 656b. The first component extension 656 extends from the attachment element 662 to an end surface 664, with the cold-side first portion 656a extending from the attachment element 662 and the cold-side second portion 656b extending from the cold-side first portion 656a to the end surface 664. The cold-side heat transfer augmentation feature 652 is formed on or in the cold-side second portion 656b in the shape of chevroned trip strips.

FIG. 7 illustrates a cold-side heat transfer augmentation feature 752 formed as rounded or spherical bumps on a cold side 754 of a component extension 756. FIG. 7 is a plan view of a component 750 as viewing the cold side 754 thereof. As shown, the component 750 includes a first component extension 756 and a second component extension 758, each extending outward or away from a component body 760 at the location of an attachment element 762. The first component extension 756 is divided into a cold-side first portion 756a and a cold-side second portion 756b. The first component extension 756 extends from the attachment element 762 to an end surface 764, with the cold-side first portion 756a extending from the attachment element 762 and the cold-side second portion 756b extending from the cold-side first portion 756a to the end surface 764. The cold-side heat transfer augmentation feature 752 is formed on or in the cold-side second portion 756b in the shape of rounded or spherical bumps.

FIG. 8 illustrates a cold-side heat transfer augmentation feature 852 formed as pedestals or a pedestal array on a cold side 854 of a component extension 856. FIG. 8 is a plan view of a component 850 as viewing the cold side 854 thereof. As shown, the component 850 includes a first component extension 856 and a second component extension 858, each extending outward or away from a component body 860 at the location of an attachment element 862. The first component extension 856 is divided into a cold-side first portion 856a and a cold-side second portion 856b. The first component extension 856 extends from the attachment element 862 to an end surface 864, with the cold-side first portion 856a extending from the attachment element 862 and the cold-side second portion 856b extending from the cold-side first portion 856a to the end surface 864. The cold-side heat transfer augmentation feature 852 is formed on or in the cold-side second portion 856b in the shape of pedestals or a pedestal array.

Although a limited number of examples are schematically shown herein, those of skill in the art will appreciate that the heat transfer augmentation feature of the present disclosure can take any shape, size, geometry, orientation, etc. without departing from the scope of the disclosure. For example, in addition to the embodiments shown herein, the heat transfer augmentation feature can be formed as, without limitation, protrusions, scallops, divoted protrusions (e.g., "golf-ball" like), grids, hatching, wave-like, bumps, etc. Moreover, although the heat transfer augmentation feature is shown on an aft component extension, the heat transfer augmentation features of the present disclosure can be located on forward component extensions.

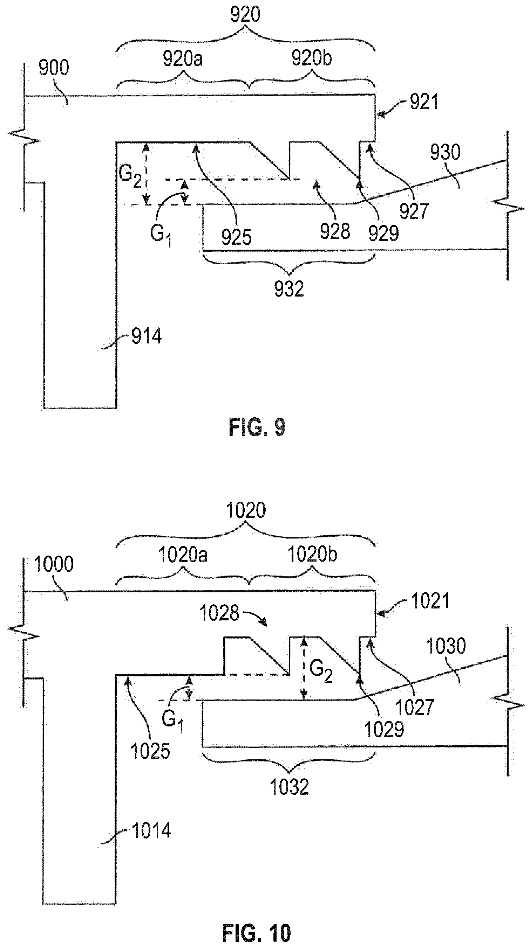

Turning now to FIG. 9, a schematic illustration of a gap formed between a component 900 and another gas turbine engine part 930 is shown. In this illustration the component 900 may be a vane platform and the other part 930 may be a platform of a blade. In this illustration, an aft end of the component 900 and a forward end of the part 930 are shown. A component extension 920 is shown extending from an attachment element 914 aftward over or adjacent a part end 932 of the part 930. As shown, the component extension 920 is divided into two regions or portions, a cold-side first portion 920a and a cold-side second portion 920b. The cold-side first portion 920a defines a surface 925 that is uniform, and does not contain heat transfer augmentation features, to thus minimize heat pickup. However, as shown, the cold-side second portion 920b of the component extension 920 includes a cold-side heat transfer augmentation feature 928, similar to that shown and described above. The cold-side second portion 920b extends aftward, in this embodiment, to an end surface 921 of the component extension 920.

The cold-side heat transfer augmentation feature 928 is defined by a plurality of features or elements that each extend from a base 927 to a tip 929 thereof. As illustrated, in this embodiment, the base 927 of the cold-side heat transfer augmentation feature 928 is level, flush, or even with the surface 925 of the cold-side first portion 920a. As such, the tip 929 is extended from the base 927 toward the part end 932 of the part 930.

As shown, a minimum gap G₁ is formed between the tip 929 (or radial extent) of the cold-side heat transfer augmentation feature 928 and the part end 932. The minimum gap G₁ may be a minimum required gap or clearance between the component 900 and the part 930 to prevent contact therebetween (e.g., due to thermal expansion, movement of the relative elements, etc.). Typically, the component extension 920 would be formed of a solid material with all of the spacing between the component extension 920 and the part end 932 being set at the minimum gap G₁. However, by using the tip 929 of the cold-side heat transfer augmentation feature 928 to set the minimum gap G₁, the rest of the component extension 920, including the cold-side first portion 920a, can be thinner, thus reducing the total part-weight of the component 900, while also maintaining the minimum gap G₁. The thinner component extension 920, as compared to typical component extension, creates an increased spacing G₂ to be formed between the component extension 920 and the part end 932.

Turning now to FIG. 10, a schematic illustration of a gap formed between a component 1000 and another gas turbine engine part 1030 is shown. In this illustration the component 1000 may be a vane platform and the other part 1030 may be a platform of a blade. In this illustration, an aft end of the component 1000 and a forward end of the part 1030 are shown. A component extension 1020 is shown extending from an attachment element 1014 aftward over or adjacent a part end 1032 of the part 1030. As shown, the component extension 1020 is divided into two regions or portions, a cold-side first portion 1020a and a cold-side second portion 1020b. The cold-side first portion 1020a defines a surface 1025 that is uniform, and does not contain heat transfer augmentation features, to thus minimize heat pickup. However, as shown, the cold-side second portion 1020b of the component extension 1020 includes a cold-side heat transfer augmentation feature 1028, similar to that shown and described above. The cold-side second portion 1020b extends aftward, in this embodiment, to an end surface 1021 of the component extension 1020.

The cold-side heat transfer augmentation feature 1028 is defined by a plurality of features or elements that each extend from a base 1027 to a tip 1029 thereof. As illustrated, in this embodiment, the tip 1029 of the cold-side heat transfer augmentation feature 1028 is level, flush, or even with the surface 1025 of the cold-side first portion 1020a. As such, the base 1027 is recessed from the tip 1029 away the part end 1032 of the part 1030.

As shown, a minimum gap G₁ is formed between the tip 1029 (or radial extent) of the cold-side heat transfer augmentation feature 1028 and the part end 1032. The minimum gap G₁ may be a minimum required gap or clearance between the component 1000 and the part 1030 to prevent contact therebetween (e.g., due to thermal expansion, movement of the relative elements, etc.). Typically, the component extension 1020 would be formed of a solid material with all of the spacing between the component extension 1020 and the part end 1032 being set at the minimum gap G₁. However, by using the tip 1029 of the cold-side heat transfer augmentation feature 1028 to set the minimum gap G₁, the rest of the component extension 1020 along the cold-side second portion 1020b, can be thinner, thus reducing the total part-weight of the component 1000, while also maintaining the minimum gap G₁. The thinner component extension 1020, as compared to typical component extension, creates an increased spacing G₂ to be formed between the component extension 1020 and the part end 1032 at the location of the cold-side second portion 1020b. In this embodiment, the relatively thicker cold-side first portion 1020a (as compared to the embodiment shown in FIG. 9) can enable reduction in part weight while maintaining structural capability of the component extension 1020.

As used herein, the term "base" of a cold-side heat transfer augmentation feature is a part, surface, or portion of the feature that is farthest from an adjoining part, and thus defines the greatest gap between the component extension and the adjoining part. Further, as used herein, the "tip" of a cold-side heat transfer augmentation feature is the portion, surface, or part of the feature that is closest to an adjoining part, and thus defines the minimum gap between the component extension and the adjoining part. As such, regardless of the mechanism for manufacturing the cold-side heat transfer augmentation feature and/or the shape, geometry, or orientation, the "base" and "tip" are generic terms that have the above definitions.

Advantageously, embodiments provided herein are directed to heat transfer augmentation feature formed in the cold side of component extensions. As such, heat transfer to the cool leakage flow is augmented. Such augmentation can result in cooler metal temperatures, and increased part life. The heat transfer augmentation feature can also impact the structural capability of the component extensions and can be used to tailor modal responses. Finally, in accordance with some embodiments, some arrangements can result in reduced part weight and a subset of these configurations will reduce weight while maintaining the same minimum gap size.

Although the various above embodiments are shown as separate illustrations, those of skill in the art will appreciate that the various features can be combined, mix, and matched to form an airfoil having a desired cooling scheme that is enabled by one or more features described herein. Thus, the above described embodiments are not intended to be distinct arrangements and structures of airfoils and/or core structures, but rather are provided as separate embodiments for clarity and ease of explanation.

As used herein, the term "about" is intended to include the degree of error associated with measurement of the particular quantity based upon the equipment available at the time of filing the application. For example, "about" may include a range of ± 8%, or 5%, or 2% of a given value or other percentage change as will be appreciated by those of skill in the art for the particular measurement and/or dimensions referred to herein.

The terminology used herein is for the purpose of describing particular embodiments only and is not intended to be limiting of the present disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof. It should be appreciated that relative positional terms such as "forward," "aft," "upper," "lower," "above," "below," "radial," "axial," "circumferential," and the like are with reference to normal operational attitude and should not be considered otherwise limiting.

## Claims

1. A component (300; 400; 550; 650; 750; 850; 900; 1000) for a gas turbine engine, the component comprising:
a component body (326; 426; 560; 660; 760; 860) having a hot side (306) and a cold side (308; 408; 554; 654; 754; 854);
an attachment element (314; 414; 562; 662; 762; 862) extending from the cold side of the component body;
a component extension (320; 420; 556; 656; 756; 856; 920; 1020) extending from the component body at the attachment element to an end surface (321; 421; 564; 664; 764; 864; 921; 1021), the component extension having a cold-side first portion (320a; 420a; 556a; 656a; 756a; 856a; 920a; 1020a) and a cold-side second portion (320b; 420b; 556b; 656b; 756b; 856b; 920b; 1020b), wherein the cold-side first portion is a portion of the component extension between the attachment element and the cold-side second portion, and the cold-side second portion is a portion of the component extension extending from the cold-side first portion to the end surface of the component extension; and
a cold-side heat transfer augmentation feature (428; 552; 652; 752; 852; 928; 1028);
the cold-side first portion defines a uniform surface (425; 925; 1025);
**characterized in that** the cold-side heat transfer augmentation feature is on the cold-side second portion of the component extension; and
the cold-side heat transfer augmentation feature (428; 552; 652; 752; 852; 928; 1028) comprises a base (427; 927; 1027) and a tip (429; 929; 1029), the tip extending away from the base.

2. The component of claim 1, wherein the base (927) is flush with the uniform surface of the cold-side first portion (920a).

3. The component of claim 1 or 2, wherein the component body is one of a platform (119, 119a) of a vane (106) of a gas turbine engine or a blade outer air seal of a gas turbine engine.

4. The component of claim 1, 2 or 3, wherein the cold-side second portion (320b; 420b; 556b; 656b; 756b; 856b; 920b; 1020b) encompasses between 20% and 80% of the component extension (320; 420; 556; 656; 756; 856; 920; 1020).

5. The component of any preceding claim, wherein the cold-side heat transfer augmentation feature (428; 552; 652; 752; 852; 928; 1028) comprises at least one of a pedestal, a trip strip, a chevron trip strip, a spherical bump, a dimple, a bump, and a protrusion.

6. The component of claim 1, wherein the component extension (320; 420; 556; 656; 756; 856; 920; 1020) is an inner diameter aft platform.

7. The component of any preceding claim, wherein the attachment element (314; 414; 562; 662; 762; 862) is a first attachment element and the component comprises a second attachment element and wherein the component extension is a first component extension (318; 420; 556; 656; 756; 856; 920; 1020) extending from the component body at the first attachment element, the component further comprising a second component extension (320; 558; 658; 758; 858) extending from the component body at the second attachment element to a second end surface, wherein the second component extension includes a respective cold-side first portion and a respective cold-side second portion, wherein the cold-side second portion of the second component extension includes a cold-side heat transfer augmentation feature.

8. A gas turbine engine (20) comprising a component as claimed in any of claims 1 to 7.

9. The gas turbine engine (20) of claim 8, further comprising a turbine section (28), wherein the component is part of the turbine section and the turbine section defines a hot gaspath therethrough.

10. The gas turbine engine (20) of claim 9, wherein the component body (326; 426; 560; 660; 760; 860) is a platform of a vane of the gas turbine engine, and wherein the hot side is exposed to the hot gaspath.

11. The gas turbine engine (20) of claim 10, further comprising a blade platform located aft of the component, wherein a gap is formed between an end of the blade platform and the component extension (320; 420; 556; 656; 756; 856; 920; 1020).

12. The gas turbine engine (20) of claim 9, wherein the component is a blade outer air seal of the turbine section (28), or wherein the component is a platform of a blade of the turbine section (28).

13. The gas turbine engine (20) of claim 8 when dependent on claim 5, further comprising a gas turbine engine part (930; 1030) having a part end (932; 1032), wherein the component extension (920; 1020) extends adjacent the part end, and wherein the tip (929; 1029) defines a portion of the cold-side heat transfer augmentation feature (928; 1028) closest to the part end and the base (927; 1027) defines a portion of the cold-side heat transfer augmentation feature farthest from the part end.

14. The gas turbine engine (20) of claim 13, wherein a spacing between the tip (929; 1029) and the part end (932; 1032) is a minimum gap distance (G₁).

15. The gas turbine engine (20) of any of claims 8 to 11, 13 or 14, wherein the component extension is an inner diameter aft platform of a vane of the gas turbine engine.

## Patentansprüche

1. Bauteil (300; 400; 550; 650; 750; 850; 900; 1000) für ein Gasturbinentriebwerk, wobei das Bauteil Folgendes umfasst:
einen Bauteilkörper (326; 426; 560; 660; 760; 860) mit einer Heißseite (306) und einer Kaltseite (308; 408; 554; 654; 754; 854);
ein Anbringungselement (314; 414; 562; 662; 762; 862), das sich von der Kaltseite des Bauteilkörpers erstreckt;
eine Bauteilerweiterung (320; 420; 556; 656; 756; 856; 920; 1020), die sich an dem Anbringungselement von dem Bauteilkörper zu einer Endfläche (321; 421; 564; 664; 764; 864; 921; 1021) erstreckt, wobei die Bauteilerweiterung einen ersten Kaltseitenabschnitt (320a; 420a; 556a; 656a; 756a, 856a; 920a; 1020a) und einen zweiten Kaltseitenabschnitt (320b; 420b; 556b; 656b; 756b, 856b; 920b; 1020b) aufweist, wobei der erste Kaltseitenabschnitt ein Abschnitt der Bauteilerweiterung zwischen dem Anbringungselement und dem zweiten Kaltseitenabschnitt ist und der zweite Kaltseitenabschnitt ein Abschnitt der Bauteilerweiterung ist, der sich von dem ersten Kaltseitenabschnitt zu der Endfläche der Bauteilerweiterung erstreckt; und
ein Kaltseiten-Wärmeübertragungsverstärkungsmerkmal (428; 552; 652; 752; 852; 928; 1028);
wobei der erste Kaltseitenabschnitt eine einheitliche Fläche (425; 925; 1025) definiert;
**dadurch gekennzeichnet, dass** sich das Kaltseiten-Wärmeübertragungsverstärkungsmerkmal an dem zweiten Kaltseitenabschnitt der Bauteilerweiterung befindet; und
wobei das Kaltseiten-Wärmeübertragungsverstärkungsmerkmal (428; 552; 652; 752; 852; 928; 1028) eine Basis (427; 927; 1027) und eine Spitze (429; 929; 1029) umfasst und die Spitze sich von der Basis weg erstreckt.

2. Bauteil nach Anspruch 1, wobei die Basis (927) bündig mit der einheitlichen Fläche des ersten Kaltseitenabschnitts (920a) ist.

3. Bauteil nach Anspruch 1 oder 2, wobei der Bauteilkörper eine von einer Plattform (119, 119a), einer Leitschaufel (106) eines Gasturbinentriebwerks oder einer äußeren Schaufelluftdichtung eines Gasturbinentriebwerks ist.

4. Bauteil nach Anspruch 1, 2 oder 3, wobei der zweite Kaltseitenabschnitt (320b; 420b; 556b; 656b; 756b, 856b; 920b; 1020b) zwischen 20 % und 80 % der Bauteilerweiterung (320; 420; 556; 656; 756; 856; 920; 1020) einnimmt.

5. Bauteil nach einem der vorstehenden Ansprüche, wobei das Kaltseiten-Wärmeübertragungsverstärkungsmerkmal (428; 552; 652; 752; 852; 928; 1028) mindestens eines von einem Sockel, einem Stolperstreifen, einem Chevron-Stolperstreifen, einer kugelförmigen Erhöhung, einer Delle, einer Erhöhung und einer Erhebung ist.

6. Bauteil nach Anspruch 1, wobei die Bauteilerweiterung (320; 420; 556; 656; 756; 856; 920; 1020) eine hintere Innendurchmesserplattform ist.

7. Bauteil nach einem der vorstehenden Ansprüche, wobei das Anbringungselement (314; 414; 562; 662; 762; 862) ein erstes Anbringungselement ist und das Bauteil ein zweites Anbringungselement umfasst und wobei die Bauteilerweiterung eine erste Bauteilerweiterung (318; 420; 556; 656; 756; 856; 920; 1020) ist, die sich an dem ersten Anbringungselement von dem Bauteilkörper erstreckt, wobei das Bauteil ferner eine zweite Bauteilerweiterung (320; 558; 658; 758; 858) umfasst, das sich an dem zweiten Anbringungselement von dem Bauteilkörper zu einer zweiten Endfläche erstreckt, wobei die zweite Bauteilerweiterung einen entsprechenden ersten Kaltseitenabschnitt und einen entsprechenden zweiten Kaltseitenabschnitt beinhaltet, wobei der zweite Kaltseitenabschnitt der zweiten Bauteilerweiterung ein Kaltseiten-Wärmeübertragungsverstärkungsmerkmal beinhaltet.

8. Gasturbinentriebwerk (20), das ein Bauteil nach einem der Ansprüche 1 bis 7 umfasst.

9. Gasturbinentriebwerk (20) nach Anspruch 8, das ferner eine Turbinenregion (28) umfasst, wobei das Bauteil Teil der Turbinenregion ist und die Turbinenregion einen dahindurch verlaufenden heißen Gaspfad definiert.

10. Gasturbinentriebwerk (20) nach Anspruch 9, wobei der Bauteilkörper (326; 426; 560; 660; 760; 860) eine Plattform einer Leitschaufel des Gasturbinentriebwerks ist und wobei die Heißseite dem heißen Gaspfad ausgesetzt ist.

11. Gasturbinentriebwerk (20) nach Anspruch 10, das ferner eine Schaufelplattform umfasst, die sich hinter dem Bauteil befindet, wobei zwischen einem Ende der Schaufelplattform und der Bauteilerweiterung (320; 420; 556; 656; 756; 856; 920; 1020) ein Spalt gebildet ist.

12. Gasturbinentriebwerk (20) nach Anspruch 9, wobei das Bauteil eine äußere Schaufelluftdichtung der Turbinenregion (28) ist oder wobei das Bauteil eine Plattform einer Schaufel der Turbinenregion (28) ist.

13. Gasturbinentriebwerk (20) nach Anspruch 8, wenn abhängig von Anspruch 5, das ferner einen Gasturbinentriebwerksbereich (930; 1030) mit einem Bereichsende (932; 1032) umfasst, wobei die sich die Bauteilerweiterung (920; 1020) benachbart zu dem Bereichsende erstreckt, und wobei die Spitze (929; 1029) einen Abschnitt des Kaltseiten-Wärmeübertragungsverstärkungsmerkmals (928; 1028) definiert, der dem Bereichsende am nächsten liegt, und die Basis (927; 1027) einen Abschnitt des Kaltseiten-Wärmeübertragungsverstärkungsmerkmals definiert, der von dem Bereichsende am weitesten entfernt ist.

14. Gasturbinentriebwerk (20) nach Anspruch 13, wobei die Beabstandung zwischen der Spitze (929; 1029) und dem Bereichsende (932; 1032) eine minimale Spaltentfernung (G₁) ist.

15. Gasturbinentriebwerk (20) nach einem der Ansprüche 8 bis 11, 13 oder 14, wobei die Bauteilerweiterung eine hintere Innendurchmesserplattform einer Leitschaufel des Gasturbinentriebwerks ist.

## Revendications

1. Composant (300 ; 400 ; 550 ; 650 ; 750 ; 850 ; 900 ; 1000) pour un moteur à turbine à gaz, le composant comprenant :
un corps de composant (326 ; 426 ; 560 ; 660 ; 760 ; 860) ayant un côté chaud (306) et un côté froid (308 ; 408 ; 554 ; 654 ; 754 ; 854) ;
un élément de fixation (314 ; 414 ; 562 ; 662 ; 762 ; 862) s'étendant depuis le côté froid du corps de composant ;
une extension de composant (320 ; 420 ; 556 ; 656 ; 756 ; 856 ; 920 ; 1020) s'étendant depuis le corps de composant au niveau de l'élément de fixation jusqu'à une surface d'extrémité (321 ; 421 ; 564 ; 664 ; 764 ; 864 ; 921 ; 1021), l'extension de composant ayant une première partie côté froid (320a ; 420a ; 556a ; 656a ; 756a ; 856a ; 920a ; 1020a) et une seconde partie côté froid (320b ; 420b ; 556b ; 656b ; 756b ; 856b ; 920b ; 1020b), dans lequel la première partie côté froid est une partie de l'extension de composant entre l'élément de fixation et la seconde partie côté froid, et la seconde partie côté froid est une partie de l'extension de composant s'étendant depuis la première partie côté froid jusqu'à la surface d'extrémité de l'extension de composant ; et
un élément d'augmentation de transfert de chaleur côté froid (428 ; 552 ; 652 ; 752 ; 852 ; 928 ; 1028) ;
la première partie côté froid définit une surface uniforme (425; 925; 1025) ;
**caractérisé en ce que** l'élément d'augmentation de transfert de chaleur côté froid se trouve sur la seconde partie côté froid de l'extension de composant ; et
l'élément d'augmentation de transfert de chaleur côté froid (428 ; 552 ; 652 ; 752 ; 852 ; 928 ; 1028) comprend une base (427 ; 927 ; 1027) et une pointe (429; 929; 1029), la pointe s'étendant à l'opposé de la base.

2. Composant selon la revendication 1, dans lequel la base (927) affleure la surface uniforme de la première partie côté froid (920a).

3. Composant selon la revendication 1 ou 2, dans lequel le corps de composant est l'un parmi une plate-forme (119, 119a) d'une aube (106) d'un moteur à turbine à gaz ou un joint d'étanchéité à l'air extérieur de pale d'un moteur à turbine à gaz.

4. Composant selon la revendication 1, 2 ou 3, dans lequel la seconde partie côté froid (320b ; 420b ; 556b ; 656b ; 756b ; 856b ; 920b ; 1020b) englobe entre 20 % et 80 % de l'extension de composant (320 ; 420 ; 556 ; 656 ; 756 ; 856 ; 920 ; 1020).

5. Composant selon une quelconque revendication précédente, dans lequel l'élément d'augmentation de transfert de chaleur côté froid (428 ; 552 ; 652 ; 752 ; 852 ; 928 ; 1028) comprend au moins un élément parmi un socle, une barrette perturbatrice, une barrette perturbatrice en chevron, une bosse sphérique, une alvéole, une bosse et une saillie.

6. Composant selon la revendication 1, dans lequel l'extension de composant (320 ; 420 ; 556 ; 656 ; 756 ; 856 ; 920 ; 1020) est une plate-forme arrière de diamètre intérieur.

7. Composant selon une quelconque revendication précédente, dans lequel l'élément de fixation (314 ; 414 ; 562 ; 662 ; 762 ; 862) est un premier élément de fixation et le composant comprend un second élément de fixation et dans lequel l'extension de composant est une première extension de composant (318 ; 420 ; 556 ; 656 ; 756 ; 856 ; 920 ; 1020) s'étendant depuis le corps de composant au niveau du premier élément de fixation, le composant comprenant en outre une seconde extension de composant (320 ; 558 ; 658 ; 758 ; 858) s'étendant depuis le corps de composant au niveau du second élément de fixation jusqu'à une seconde surface d'extrémité, dans lequel la seconde extension de composant inclut une première partie côté froid respective et une seconde partie côté froid respective, dans lequel la seconde partie côté froid de la seconde extension de composant inclut un élément d'augmentation de transfert de chaleur côté froid.

8. Moteur à turbine à gaz (20) comprenant un composant selon l'une quelconque des revendications 1 à 7.

9. Moteur à turbine à gaz (20) selon la revendication 8, comprenant en outre une section de turbine (28), dans lequel le composant fait partie de la section de turbine et la section de turbine définit un trajet de gaz chaud à travers celle-ci.

10. Moteur à turbine à gaz (20) selon la revendication 9, dans lequel le corps de composant (326 ; 426 ; 560 ; 660 ; 760 ; 860) est une plate-forme d'une aube du moteur à turbine à gaz, et dans lequel le côté chaud est exposé au trajet de gaz chaud.

11. Moteur à turbine à gaz (20) selon la revendication 10, comprenant en outre une plate-forme de pale située à l'arrière du composant, dans lequel un écart est formé entre une extrémité de la plate-forme de pale et l'extension de composant (320 ; 420 ; 556 ; 656 ; 756 ; 856 ; 920 ; 1020).

12. Moteur à turbine à gaz (20) selon la revendication 9, dans lequel le composant est un joint d'étanchéité à l'air extérieur de pale de la section de turbine (28), ou dans lequel le composant est une plate-forme d'une pale de la section de turbine (28).

13. Moteur à turbine à gaz (20) selon la revendication 8 lorsqu'elle dépend de la revendication 5, comprenant en outre une partie de moteur à turbine à gaz (930 ; 1030) ayant une extrémité de partie (932 ; 1032), dans lequel l'extension de composant (920 ; 1020) s'étend de manière adjacente à l'extrémité de partie, et dans lequel la pointe (929 ; 1029) définit une partie de l'élément d'augmentation de transfert de chaleur côté froid (928 ; 1028) la plus proche de l'extrémité de partie et la base (927 ; 1027) définit une partie de l'élément d'augmentation de transfert de chaleur côté froid la plus éloignée de l'extrémité de partie.

14. Moteur à turbine à gaz (20) selon la revendication 13, dans lequel un espacement entre la pointe (929 ; 1029) et l'extrémité de partie (932 ; 1032) est un écart minimal (G₁).

15. Moteur à turbine à gaz (20) selon l'une quelconque des revendications 8 à 11, 13 ou 14, dans lequel l'extension de composant est une plate-forme arrière de diamètre intérieur d'une aube du moteur à turbine à gaz.
